# EUROPEAN PATENT APPLICATION

(11) **EP 2 404 751 A1**
(43) Date of publication of application: **11.01.2012**
(21) Application number: 11173370.5
(22) Date of filing: 08.07.2011
(51) Int. Cl.: B32B 5/18, B32B 27/08, B32B 27/30, B32B 27/40, A47K 3/02, A47K 3/28, A47K 3/40

(54) **Composite material**

(30) Priority: 09.07.2010 US 362898 P
(71) Applicant: Masco Bath Corporation, Morrestown, NJ 08057 (US)
(72) Inventor: Geels, Michael, Jackson, TN Tennessee 38305 (US)
(74) Representative: Croston, David

(57) **Abstract**

A wall panel for a bathing system includes a first layer, a second layer, and an adhesive. The first layer is thermo-formable and includes first and second sub-layers. The first sub-layer includes poly(methyl methacrylate), and the second sub-layer includes acrylonitrile butadiene styrene. The first and second sub-layers are co-extruded together. The second layer is fastened to the first layer, and includes a poly-isocyanurate foam sheet, as well as first and second metal faces fastened to the sides of the poly-isocyanurate foam sheet. The adhesive binds the second sub-layer of the first layer to either the first or the second metal face of the second layer.

## Description

### BACKGROUND

The present disclosure relates generally to the field of composite materials. More specifically the present disclosure relates to composite materials, as used in the construction of wall panels for bathing systems.

Conventional bathing systems, such as shower stalls, are typically formed from materials designed to achieve the performance requirements provided in the International Association of Plumbing and Mechanical Offices (IAPMO) American National Standards Institute (ANSI) Z124.1.2-2005 and American Society for Testing and Materials (ASTM) E-84 standard test methods and ratings for building materials. Such performance requirements generally relate to composition and finish, clean-ability, impact resistance, deflection, color, stain and chemical resistance, thermal shock resistance, smoke development and flame spread index, among other material parameters.

Material selection for bathing systems in compliance with ASTM E-84 typically requires a trade-off between smoke development and flame spread index parameters, because as materials bum more readily, in general the materials generate less smoke. Typical materials selected for bathing systems include fiberglass reinforced plastics (FRP) containing high levels of inert fillers, and/or halogenated polyester resins. Flame retardants are typically added to achieve the required material characteristics of IAPMO/ANSI Z124.1.2-2005 and ASTM E-84.

### BRIEF DESCRIPTION OF THE FIGURES

The disclosure will become more fully understood from the following detailed description, taken in conjunction with the accompanying figures, in which:

FIG. 1 is a sectional view of a sheet of composite material according to an exemplary embodiment.

FIG. 2 is a perspective view of a wall construction according to an exemplary embodiment.

FIG. 3 is a front view of the wall construction of FIG. 2.

FIG. 4 is a top view of the wall construction of FIG. 2.

FIG. 5 is an exploded, perspective view of the wall construction of FIG. 2.

FIG. 6 is an exploded, top view of the wall construction of FIG. 2.

FIG. 7 is an exploded view of a portion of a composite material according to an exemplary embodiment.

### DETAILED DESCRIPTION

Before turning to the figures, which illustrate the exemplary embodiments in detail, it should be understood that the present application is not limited to the details or methodology set forth in the description or illustrated in the figures. It should also be understood that the terminology is for the purpose of description only and should not be regarded as limiting.

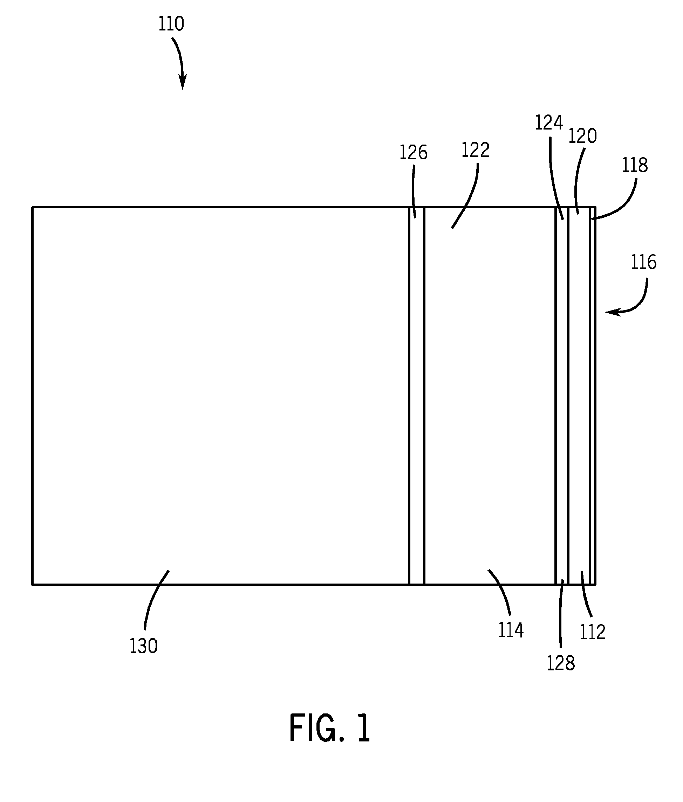

Referring to FIG. 1, a composite material 110 includes a first layer 112 and a second layer 114, and may be coupled to a wall stud 130 or other body. The first layer 112 is coupled to the second layer 114 by way of a lamination process, an extrusion process, an adhesion process, or other coupling method. According to an exemplary embodiment, the first layer 112 includes an outside face intended to serve as a service side 116 of a wall panel, bathing vessel, shower stall, and/or other structure. In some embodiments, the second layer 114 is intended to serve as backing for the first layer 112, providing strength, rigidity, and a unique fire retardant effect when coupled with the first layer 112.

According to an exemplary embodiment, the first layer 112 includes a thermo-formable sheet. In some such embodiments, the first layer is further formed from co-extruded sub-layers of poly(methyl methacrylate) 118 (i.e., poly(methyl 2-methylpropenoate), methyl methacrylate resin, (C₅O₂H₈)ₙ; e.g., Acrylite, Policril, Plexiglas, acrylic glass; hereinafter PMMA) and acrylonitrile butadiene styrene 120 (e.g., (C₈H₈)ₓ•(C₄H₆)_{y}•(C₃H₃N)_{z}; hereinafter ABS). In some embodiments, the PMMA sub-layer 118 serves as a cap for the ABS sub-layer 120. The PMMA sub-layer 118 forms the service side 116 of the first layer 112, providing clean-ability, stain resistance, color, and other properties. The ABS sub-layer 120 provides strength, rigidity, toughness, deflection characteristics, and other properties. In other contemplated embodiments, another thermoplastic is used in place of either of both of the PMMA or ABS sub-layers 118, 120.

In some embodiments, the dimensions of the sub-layers 118, 120 are designed to be thick enough not to bum too quickly, but thin enough not to generate too much smoke when burned. As such, the overall thickness of the first layer 112 may range from about 90/1000 of an inch to about 200-225/1000 of an inch, in some embodiments, where in such embodiments the PMMA layer 118 forms about 12% of the overall thickness, and is generally not less than about 10/1000 of an inch thick.

In some embodiments, the first layer 112 is not formed from and/or does not include a fire-retardant or fire resistant material. In such embodiments, no inert fillers or halogenated polyester resins are added to the first layer 112. If exposed to flame and/or heat without the second layer 114, the first layer 112, or a sub-layer 118, 120 of the first layer 112, may quickly bum.

According to an exemplary embodiment, the second layer 114 includes a foam sheet 122, and may further include one or more facings 124, 126 coupled to the foam sheet 122. In some such embodiments, the foam sheet 122 may be foil-faced on one or more sides. In at least one embodiment, the foam sheet 122 is sandwiched between foil faces 124, 126. The foil faces 124, 126 may be formed from aluminum foil, such as pure embossed aluminum. However in other embodiments other metals (e.g., corrosion-protected, corrugated steel), plastics, composite, or other foils may be used as facing materials. In a preferred embodiment, the foil faces 124, 126 are positioned on both sides of the foam sheet 122, and are formed from a material that does not easily ignite, such as aluminum or other metals.

In some embodiments, an adhesive 128 is used to couple the first and second layers 112, 114 of the composite material 110. According to an exemplary embodiment, the adhesive 128 is positioned between one of the foil faces 124 of the second layer 114 and the ABS sub-layer 120 of the first layer 112. The adhesive may be a glue, such as 3M Hi-Strength 90 Spray Adhesive. However, other adhesives or fasteners may be used. In contemplated embodiments, the first and second layers 112, 114 may be pinned, riveted, spot welded, or otherwise coupled together.

According to an exemplary embodiment, the foam sheet 122 includes a poly-isocyanurate foam (i.e., PIR, polyiso, ISO foam), such as a fiberglass-reinforced poly-isocyanurate foam (e.g., THERMAX sheathing or insulation produced by The Dow Chemical Company). In other embodiments, another form of poly-isocyanurate insulation or foam material is used. In still other contemplated embodiments, polyeurethane (with fire-retardant), expanded polystyrene, or another material may be used as part of the foam sheet, such as in combination with poly-isocyanurate. Use of the foam sheet 122 as backing for the composite material 110 is intended to lighten the weight of the composite material 110, when compared to other materials such as FRP with high levels of inert fillers used for wall construction or other purposes.

According to an exemplary embodiment, the foam sheet 122 is further intended to serve as a heat sink. If a flame or heat source is applied to the first layer 112, the second layer 114 will absorb, distribute, or otherwise dissipate the heat, and not quickly bum. According to an exemplary embodiment, the foam sheet 122 is thick enough to sufficiently serve as a heat sink. In some such embodiments, the foam sheet 122 is about an inch or more than an inch in thickness.

Applicants believe that the combination of the second layer 114 with the first layer 112 increases the survivability of the first layer 112 in situations where the first layer would otherwise ignite, because the second layer 114 draws heat from the first layer 112, and redistributes the heat. In turn, the first layer 112 improves the survivability of the second layer 114 by providing rigidity and strength to the second layer 114, preventing warping or crumpling in heat. As such, the combination of the properties of the first and second layers 112, 114 enhance each other, and provide embodiments of the composite material 110 that are fire-resistant or fire-retardant-without the inclusion of high-levels of inert fillers and/or halogenated polyester resins in such embodiments of the composite material 110.

In some embodiments, the first layer 112 or one of the sub-layers 118, 120 of the first layer 112 (e.g., PMMA sub-layer 118) is designed to quickly bum away, not producing significant smoke or a long-lasting flame. The second layer 114, alone or in combination with another of the sub-layers 118, 120 (e.g., ABS sub-layer 120), retards flame propagation. The foil faces 124, 126 may help prevent the foam sheet 122 of the second layer 114 from catching fire.

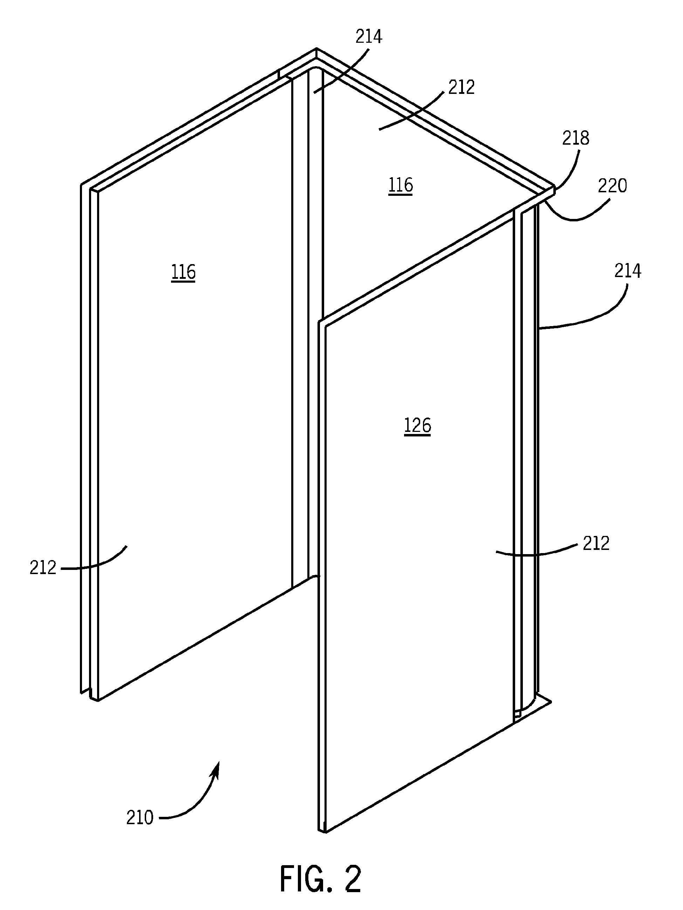

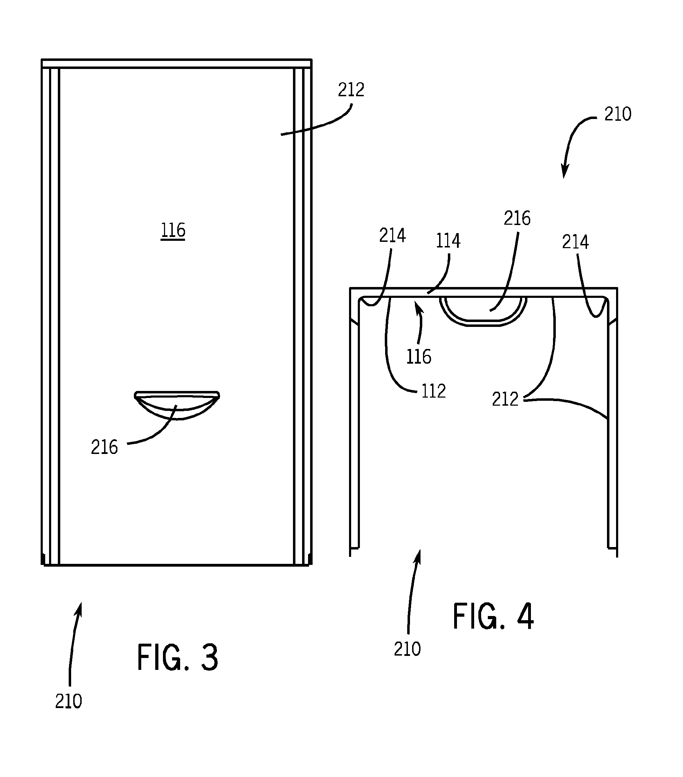

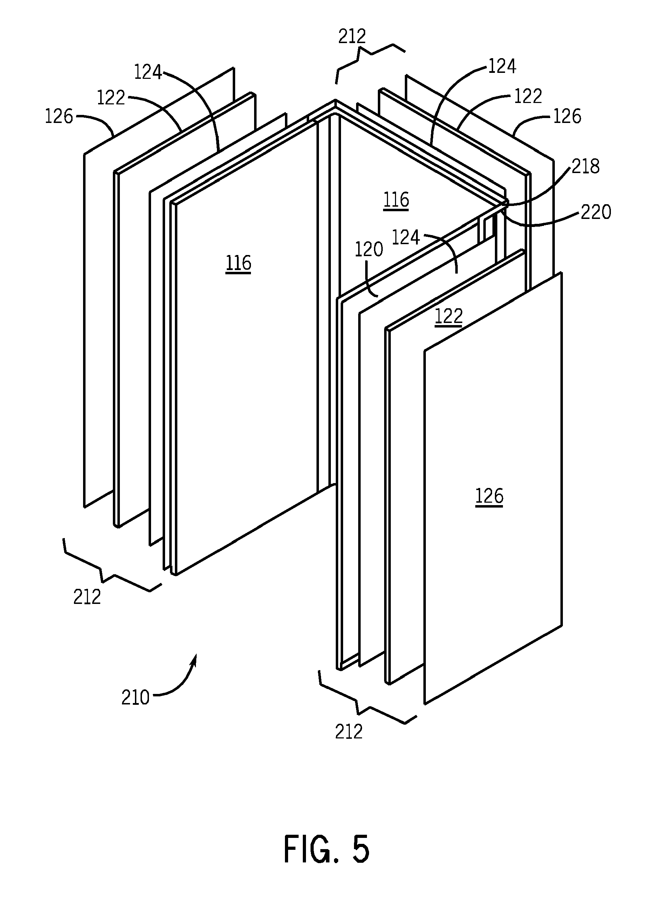

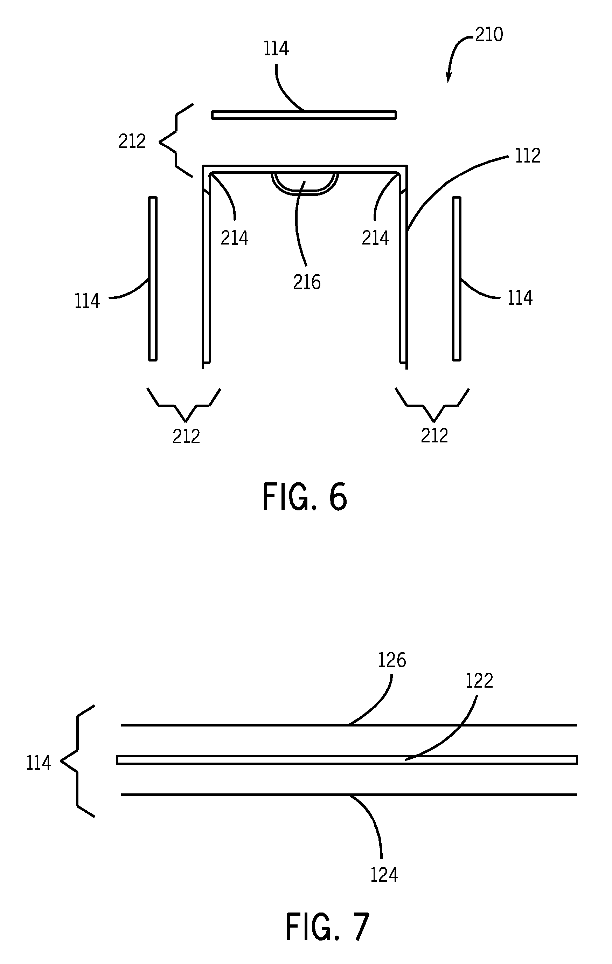

Referring now to FIGS. 2-7, a bathing system 210 includes wall panels 212 formed from a composite material, such as the composite material 110 of FIG. 1, or another embodiment of a composite material as described. According to an exemplary embodiment, the bathing system 210 is a Universal Design bathing system, produced by Masco Bath Corporation (Delta brand). However, in other embodiments, a wide variety of types and configuration of bathing systems use such a composite material.

The bathing system 210 may be used in a residential or commercial setting, and may support a shower enclosure, bath tub, bathroom, or other structure. The composite material 110, and other embodiments of a composite material as described, may be broadly used in a wide variety of settings, inside and outside of a washroom, such as with walls, doors, floors, or layers within such walls, doors, and floors.

During manufacturing the first layer 112 may be heated and vacuum-formed into the shape of the wall panel 212. In some embodiments, the wall panel 212 may include rounded corners 214 and a soap dish 216. Although shown as substantially flat in FIGS. 2-7, in other embodiments, wall panels may be otherwise contoured (e.g., rounded, wavy, rippled, etc.).

According to an exemplary embodiment, the first layer 112 may be thermo-formed to include a flange 218 (e.g., tiling flange) around one or more of the outside edges of the wall panel 212, forming an enclosure 220 (e.g., pocket, recess, cavity) within which the second layer 114 may be positioned. During assembly, the second layer 114, serving as backing material, is applied to the first layer 112 and provides further rigidity by filling the enclosure 220 between the first layer 112 (e.g., wall service sheet) and the wall studs 130 (FIG. 1) of a framed installation pocket.

Wall panels 212 formed from the composite material 110 may be manufactured in rectangular sheets or other dimensionally-repeatable shapes by way of an extrusion process, where the layers 112, 114 are pinched together with rollers and binders. Although a wide variety of geometries are contemplated, rectangular sheets may be quickly produced. Use of materials, such as PMMA and ABS in the first layer 112 coupled to foil-faced poly-isocyanurate foam in the second layer 114, does not require curing or manual operations, in contrast to manufacturing associated with fiberglass reinforced plastics with halogenated polyester resins.

The construction and arrangements of the composite material and bathing system, as shown in the various exemplary embodiments, are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. Some elements shown as integrally formed may be constructed of multiple parts or elements, the position of elements may be reversed or otherwise varied, and the nature or number of discrete elements or positions may be altered or varied. The order or sequence of any process, logical algorithm, or method steps may be varied or re-sequenced according to alternative embodiments. Other substitutions, modifications, changes and omissions may also be made in the design, operating conditions and arrangement of the various exemplary embodiments without departing from the scope of the present invention.

## Claims

1. A composite material, comprising:
a first layer comprising a thermo-formable material; and
a second layer comprising poly-isocyanurate, the second layer coupled to the first layer.

2. The composite material of claim 1, wherein the first layer comprises poly(methyl methacrylate) and/or acrylonitrile butadiene styrene.

3. The composite material of claim 1 or 2, wherein the first layer is coupled to the second layer by way of an adhesive.

4. The composite material of any preceding claim, wherein the second layer includes a first face and a second face that sandwich the poly-isocyanurate.

5. The composite material of claim 4, wherein the first and second faces are formed from aluminum and the poly-isocyanurate includes fiberglass reinforcement.

6. The composite material of claim 5, wherein the first layer comprises:
a first sub-layer of poly(methyl methacrylate), and
a second sub-layer of acrylonitrile butadiene styrene,
wherein the first and second sub-layers are overlapping and coextensive.

7. The composite material of claim 6, wherein the first layer is coupled to the second layer by way of an adhesive.

8. The composite material of claim 6 or 7, wherein the second sub-layer is thicker than the first sub-layer.

9. The composite material of any preceding claim, wherein the first and second layers are substantially overlapping and coextensive.

10. A wall panel for a bathing system, comprising:
a first layer of thermo-formable material, wherein the first layer further comprises:
a first sub-layer comprising poly(methyl methacrylate), and
a second sub-layer comprising acrylonitrile butadiene styrene,
wherein the first and second sub-layers are co-extruded together; and a second layer coupled to the first layer, wherein the second layer comprises:
a poly-isocyanurate foam sheet;
first and second metal faces coupled to the poly-isocyanurate foam sheet;
an adhesive binding the second sub-layer of the first layer to either the first or the second metal face of the second layer.

11. The wall panel of claim 10, wherein the first and second layers are substantially overlapping and coextensive.

12. The wall panel of claim 10 or 11, wherein the first layer includes a flange on an end thereof that at least partially extends around a side of the second layer.

13. The wall panel of claim 12, wherein the flange forms an enclosure within which the second layer is positioned.

14. The wall panel of claim 13, wherein the first and second layers are substantially rectangular.

15. A method of manufacturing a composite material, comprising:
co-extruding a first layer comprising:
a first sub-layer ofpoly(methyl methacrylate) and
a second sub-layer of acrylonitrile butadiene styrene; and
adhering the first layer to a second layer comprising a sheet of poly-isocyanurate foam.

16. The method of claim 15, wherein the adhering step further includes providing an adhesive between the second sub-layer of the first layer and a metal face of the second layer.

17. The method of claim 16, further comprising:
thermo-forming the first layer into a shape of a soap dish or a wall panel comprising a flange.

18. The method of claim 17, where the step of thermo-forming the first layer comprises thermo-forming the first layer into a shape of a wall panel comprising a flange and the method further comprising:
placing the second layer under the flange of the first layer.
